**Europäisches Patentamt**

**European Patent Office**

**Office européen des brevets**

(19)

(11) Veröffentlichungsnummer: **0 337 473 B1**

(12) **EUROPÄISCHE PATENTSCHRIFT**

(45) Veröffentlichungstag der Patentschrift:
19.06.91 Patentblatt 91/25

(51) Int. Cl.⁵: **B60T 11/20, B60T 13/52**

(21) Anmeldenummer: **89106655.7**

(22) Anmeldetag: **14.04.89**

(54) **Hydraulische Bremsanlage.**

(30) Priorität: **15.04.88 DE 8805017 U**

(43) Veröffentlichungstag der Anmeldung:
**18.10.89 Patentblatt 89/42**

(45) Bekanntmachung des Hinweises auf die
Patenterteilung:
**19.06.91 Patentblatt 91/25**

(84) Benannte Vertragsstaaten:
**DE ES FR GB IT**

(56) Entgegenhaltungen:
**EP-A- 0 194 593**
**DE-A- 3 508 753**
**GB-A- 2 175 660**

(73) Patentinhaber: **LUCAS INDUSTRIES public
limited company
Great King Street
Birmingham, B19 2XF West Midlands (GB)**

(72) Erfinder: **Schlüter, Peter
Faulbachstrasse 14a
W-5411 Kammerforst (DE)**

(74) Vertreter: **von Hellfeld, Axel, Dipl.-Phys. Dr. et
al
Wuesthoff & Wuesthoff Patent- und
Rechtsanwälte Schweigerstrasse 2
W-8000 München 90 (DE)**

## Beschreibung

Die Erfindung betrifft eine hydraulische Bremsanlage mit einem Hauptbremszylinder, einem Bremskraftverstärker und einer Füllkammer, mittels der in der Anfangsphase einer Bremsbetätigung die Bremsanlage bei relativ kurzem Pedalweg schnell mit Hydraulikflüssigkeit bis auf einen vorgegebenen Abschaltdruck gefüllt wird, wobei die Füllkammer in leitender Verbindung mit einer Primärkammer des Hauptbremszylinders steht und mit einem Hydraulikflüssigkeitsreservoir über ein erstes Ventil verbindbar ist, welches bei funktionierendem Bremskraftverstärker und einem Druck in der Hydraulikflüssigkeit unterhalb des Abschaltdruckes schließt und bei nichtfunktionierendem Bremskraftverstärker öffnet.

Bei einer solchen, aus der DE-OS 35 08 753 bekannten hydraulischen Bremsanlage ist also der übliche Hauptbremszylinder um einen als solchen ebenfalls bekannten Bremskraftverstärker sowie eine sogenannte Füllstufe ergänzt. Füllstufen für sich sind z.B. aus der US-PS 40 86 770 bekannt. Mit einer Füllstufe wird erreicht, daß bei einer Bremsbetätigung in der Anfangsphase des Pedalweges die Bremsanlage schnell mit Hydraulikflüssigkeit aufgefüllt wird. Der Fahrer braucht also das Bremspedal nur über einen relativ kurzen Weg zu drücken. Sobald ein bestimmter Druck in der Hydraulikflüssigkeit, der sogenannte Abschaltdruck, erreicht ist, schaltet die Füllstufe ab, d.h. wird unwirksam. Bei weiterem Durchdrücken des Bremspedals wird in der Bremsanlage kaum noch Hydraulikflüssigkeit bewegt, sondern der Pedaldruck setzt sich direkt hydraulisch in Bremsdruck um.

Bremskraftverstärker, die z.B. aus der DE-OS 24 50 474 und der US-PS 31 09 287 bekannt sind, unterstützen die Wirkung des Bremspedals und weisen in der Regel zwei Kammern mit einer beweglichen Trennwand auf, die als Membranteller bezeichnet wird. Mittels des Motors wird zwischen den Kammern eine Druckdifferenz erzeugt, so daß der Membranteller die Wirkung des vom Fahrer betätigten Bremspedals unterstützt.

In der eingangs genannten DE-OS 35 08 753 werden die Füllstufe und der Bremskraftverstärker in ihrer Funktion voneinander abhängig ausgestaltet, d.h. Füllstufe und Bremskraftverstärker funktionieren nicht unabhängig voneinander. Dem liegt die Erkenntnis zugrunde, daß bei Ausfall des Bremskraftverstärkers dadurch erhebliche Probleme entstehen können, daß der Fahrer dann (zusätzlich zum normalen Druckaufbau im Hauptbremszylinder) die Betätigungskraft für die Füllstufe bis zu dem relativ hohen Abschaltdruck direkt über das Bremspedal aufbringen muß. Die dabei auftretende Änderung des Pedalwiderstandes kann den Fahrer irritieren.

In der DE-OS 35 08 753 wird deshalb vermieden, daß der Fahrer bei einem Ausfall des Bremskraftverstärkers störende Unregelmäßigkeiten im Widerstand des Bremspedals feststellt. Hierzu ist vorgesehen, daß die Füllkammer der Füllstufe mit einem Reservoir für Hydraulikflüssigkeit über ein Ventil verbindbar ist, welches bei funktionierendem Bremskraftverstärker schließt und bei nichtfunktionierendem Bremskraftverstärker öffnet. Zwischen der Füllkammer und der Primärkammer (also der Hochdruckkammer im Hauptbremszylinder zur Speisung des Primärkreises bei einer Zweikreis-Bremsanlage) ist eine abdichtende Manschette angeordnet, welche Hydraulikflüssigkeit aus der Füllkammer in die Hochdruckkammer durchläßt, in umgekehrter Richtung aber sperrt.

Der Erfindung liegt die Aufgabe zugrunde, bei einer gattungsgemäßen hydraulischen Bremsanlage die Funktionssicherheit weiter zu erhöhen.

Erfindungsgemäß wird diese Aufgabe dadurch gelöst, daß in der Verbindungsleitung zwischen der Füllkammer und der Primärkammer ein zweites Ventil angeordnet ist, das bei einem Druck in der Hydraulikflüssigkeit oberhalb des Abschaltdruckes schließt.

Während also beim gattungsbildenden Stand der Technik gemäß der DE-OS 35 08 753 die Füllkammer der Füllstufe über eine abdichtende Manschette mit der Primärkammer des Hauptbremszylinders verbunden ist, ist nunmehr erfindungsgemäß vorgesehen, in dieser Verbindungsleitung ein Ventil vorzusehen, welches dann schließt, wenn der Druck in der Hydraulikflüssigkeit den Abschaltdruck der Füllstufe erreicht hat, so daß die leitende Verbindung zwischen der Füllkammer und der Primärkammer unterbrochen ist und der Fahrer den Bremsdruck nunmehr ausschließlich noch über das Bremspedal und ggf. unter Unterstützung durch den Bremskraftverstärker erhöht.

Diese erfindungsgemäße Anordnung eines weiteren Ventils in der Verbindungsleitung zwischen der Füllkammer und der Primärkammer ermöglicht gegenüber dem Stand der Technik eine Reihe von Verbesserungen. Die Abhängigkeit der Funktion der Füllstufe von der Funktionstüchtigkeit des Bremskraftverstärkers hängt erfindungsgemäß nicht mehr von durch elastische Dichtungen erzeugten Reibkräften ab, welche, bedingt durch Herstellungstoleranzen und/oder Verschleiß, stark variieren können. Auch der Nachteil des Standes der Technik, daß das Schließen bzw. Öffnen der Verbindung zwischen der Füllkammer und dem Reservoir einen ganz bestimmten Druck in einer Kammer des Bremskraftverstärkers voraussetzt, ist mittels der erfindungsgemäßen Anordnung überwunden.

Überdies wird durch die erfindungsgemäße Ausgestaltung der Bremsanlage ermöglicht, daß auch bei Ausfall des Bremskraftverstärkers während einer Bremsung keine Irritation des Fahres erfolgt.

Mit der in den Unteransprüchen beschriebenen Ausgestaltung der Erfindung ist es überdies möglich, eine weitgehende Selbstüberwachung der Funktionstüchtigkeit der hydraulischen Bremsanlage durchzuführen. Wenn in den Ventilen vorgesehene elastische Dichtungen durch Verschleiß undicht werden sollten, wird dies dem Fahrer durch eine drastische Änderung des Pedalweges und -widerstandes angezeigt, ohne daß die Bremse sofort ihre Funktionstüchtigkeit verliert. Der Fahrer kann also trotz defekter Dichtung mit funktionstüchtiger Bremse zu einer Werkstatt fahren.

Nachfolgend wird ein Ausführungsbeispiel der Erfindung anhand der Zeichnung näher erläutert. Es zeigt:

Fig. 1    einen Axialschnitt durch einen Hauptbremszylinder einschließlich eines Bremskraftverstärkers ;

Fig. 2    einen Schnitt entlang der Linie I-I der Fig. 1 ;

Fig. 3    ein hydraulisches Blockschaltbild der Bremsanlage gemäß den Fig. 1 und 2 ; und

Fig. 4    eine Abwandlung eines Details aus Fig. 2.

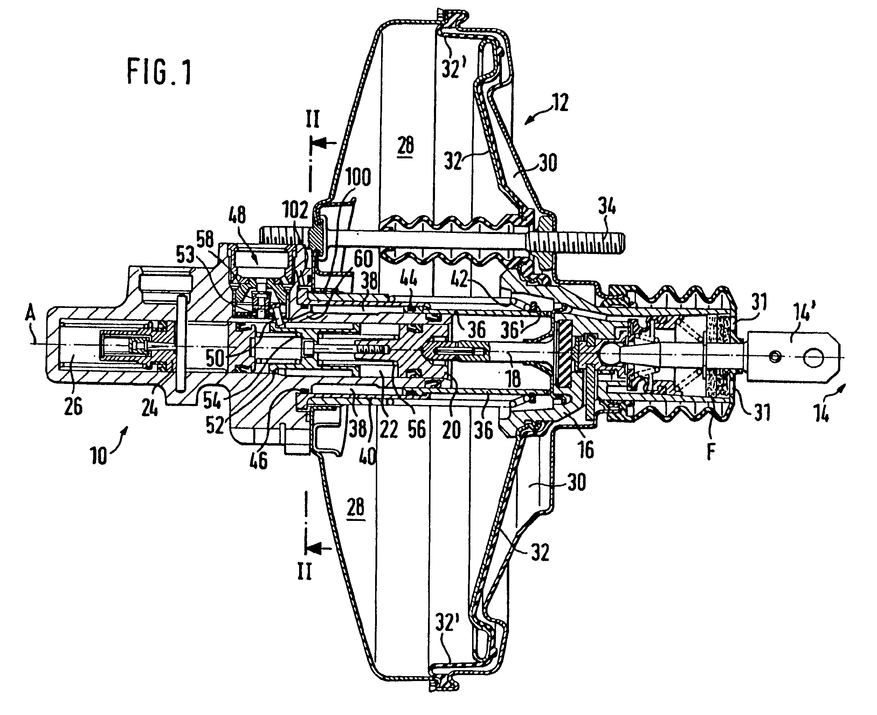

In den Figuren ist ein in wesentlichen Teilen bekannter Hauptbremszylinder 10 einschließlich eines Bremskraftverstärkers (Booster) 12 gezeigt. Ein vom Fahrer zu betätigendes Bremspedal ist bei 14 angeordnet und drückt beim Bremsen einen Pedalstössel 14' in Fig. 1 von rechts nach links. Der Pedalstößel ist mit einem als solchem bekannten Steuergehäuse 16 verbunden, welches über einen weiteren Stößel 18 auf einen Primärkolben 20 einwirkt. Bei Bewegung des Primärkolbens 20 in Fig. 1 nach links wird der Druck in einer Hydraulikflüssigkeit in einer Primärkammer 22 erhöht. Ein Sekundärkolben 24 bewegt sich bei Betätigung des Pedalstößels 14' ebenfalls nach links und erhöht den Druck der Hydraulikflüssigkeit in einer Sekundärkammer 26.

Es handelt sich also um eine an sich bekannte Zweikreisbremse und der Hauptbremszylinder 10 ist ein sogenannter Tandemhauptzylinder.

Der für sich ebenfalls bekannte Bremskraftverstärker 12 weist eine Unterdruckkammer 28 und eine Überdruckkammer 30 auf, welche durch einen beweglichen Membranteller 32 und eine elastische Membran 32' voneinander getrennt sind. Über einen Lufteintritt 31 tritt Luft unter Atmosphärendruck in die Überdruckkammer 30 ein, während in der Unterdruckkammer 28 mittels des Motors ein Unterdruck erzeugt wird, so daß sich der Membranteller in bekannter Weise in Fig. 1 von rechts nach links verschiebt und dabei über das Steuergehäuse 16 den Stößel 18 beaufschlagt. Der Membranteller 32 wird auf einem Führungsstift 34 geführt.

Der Hauptbremszylinder 10 ist mit einer nachfolgend beschriebenen Füllstufe versehen. Die Füllstufe weist einen Ringkolben 36 auf, der nur vom Membranteller 32 des Bremskraftverstärkers 12 beaufschlagt wird, also nicht vom Bremspedal. Der Ringkolben 36 hat einen wesentlich größeren Durchmesser als der Primärkolben 20 und der Sekundärkolben 24 und wird mittels des Membrantellers 32 in Fig. 1 nach links in eine Füllkammer 38 geschoben, so daß darin enthaltene Hydraulikflüssigkeit unter Druck gesetzt und unter weiter unten beschriebenen Voraussetzungen in die Primärkammer 22 gedrückt wird.

Die Füllkammer 38 wird außen durch eine Hülse 40 begrenzt. Eine Feder 42 ist über die Hülse 40 geschoben und stützt sich gemäß Fig. 1 links an einem Festanschlag ab. Rechts drückt die Feder 42 gegen einen Anschlag 36' des Ringkolbens 36, so daß dieser nach rechts vorgespannt ist.

Die Füllkammer 38 wird durch Dichtungen 44, 46 abgedichtet.

Der Hauptbremszylinder 10 ist weiterhin mit einem an sich bekannten Ausgleichsbehälter 48 versehen, in dem Hydraulikflüssigkeit bereitgehalten wird, um eventuelle Verluste in der Bremsanlage auszugleichen. Der Ausgleich von verlorener Hydraulikflüssigkeit erfolgt mittels eines Schwenkhebels 50, welcher die leitende Verbindung zwischen dem Ausgleichsbehälter 48 und den Primär- und Sekundärkammern in an sich bekannter Weise bei Bedarf öffnet. Hierzu ist eine in Axialrichtung verschiebbare Hülse 52 vorgesehen, die durch zwei Federn 54, 56 in entgegengesetzten Richtungen beaufschlagt wird. Die Feder 56 ist stärker als die Feder 54. Bei Betätigung des Bremspedals bewegt sich die Hülse 52 in Fig. 1 nach links und der Schwenkhebel 50 kommt frei. Mittels einer Feder 53 bleibt das Ventil 58, welches den Ausgleichsbehälter 48 mit den Primär- und Sekundärkammern verbindet, geschlossen. Beim Rückhub des Pedalstößels 14' kann die Hülse 52 den Schwenkhebel 50 erfassen und das Ventil 58 öffnen, so daß eine Nachfüllung von Hydraulikflüssigkeit stattfinden kann.

Ein Kanal 60 zweigt von der Füllkammer 38 ab und führt über weiter unten beschriebene Kammern, Bohrungen sowie ein Ventil zur Primärkammer 22.

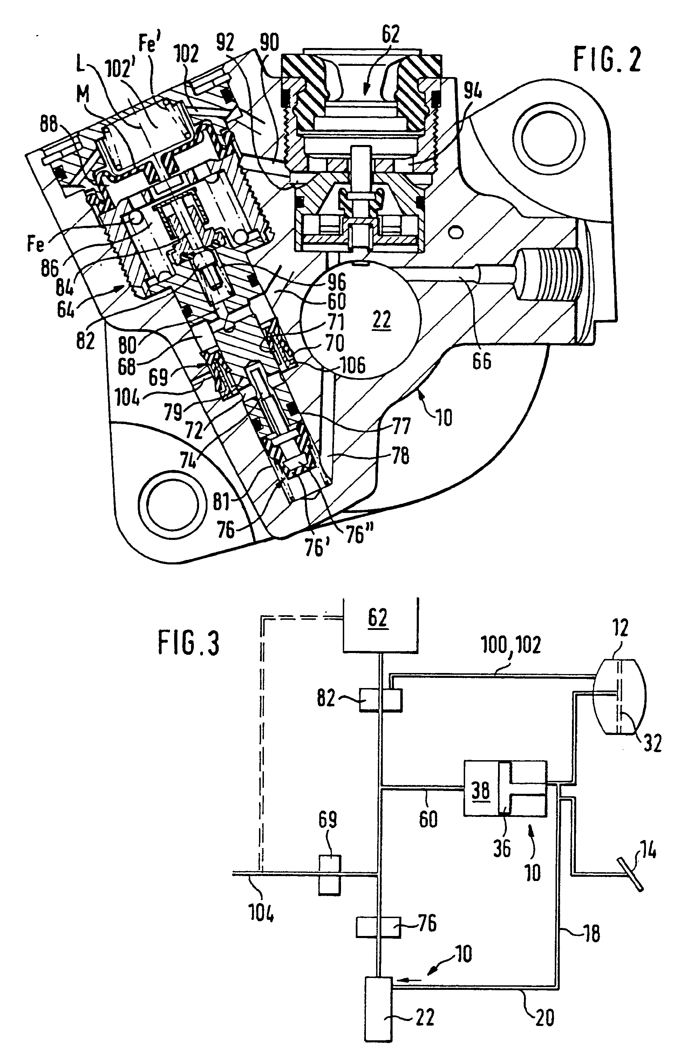

Gemäß dem in Fig. 2 gezeigten Schnitt senkrecht zur Längsachse A des Hauptbremszylinders 10 ist zusätzlich zum Ausgleichsbehälter 48 ein Reservoir 62 für Hydraulikflüssigkeit vorgesehen, welches mit der Füllstufe zusammenwirkt.

Eine Ventilanordnung 64 (Fig. 2) ist zwischen dem von der Füllkammer 38 kommenden Kanal 60 und dem Reservoir 62 einerseits sowie der Primärkammer 22 andererseits angeordnet. Der Kanal 60 verzweigt sich also gemäß Fig. 2 einerseits zum Reservoir 62 und andererseits zur Primärkammer 22, wobei jeweils nachfolgend beschriebene Ventile zwischengeschaltet sind, siehe auch das Blockschaltbild gemäß Fig. 3.

Zunächst wird die Verbindung zwischen der Füllkammer 38 und der Primärkammer 22 beschrieben. Der von der Füllkammer 38 kommende Kanal 60 mündet in einen Raum 68 (Fig. 2). Über eine von zwei Dichtlippen 70, 71 eines weiter unten noch näher beschriebenen Ventils 69 geht der Strömungsweg für die Hydraulikflüssigkeit durch eine Bohrung 72 in eine weitere Bohrung 74, die koaxial mit der Längsachse L der Ventilanordnung 64 ausgebildet ist. Über ein weiteres Ventil 76 geht der Strömungsweg in den Kanal 78, der direkt in die Primärkammer 22 führt. In Fig. 2 ist auch noch der Anschlußkanal 66 des Primär-Bremskreises zu erkennen.

Nachfolgend wird die Verbindung zwischen der Füllkammer 38 und dem Reservoir 62 beschrieben. Der von der Füllkammer 38 kommende Kanal 60 mündet auch in eine Bohrung 80, von wo der Strömungsweg der Hydraulikflüssigkeit an einem Ventil 82 vorbei durch einen Kanal 84 in eine Kammer 86 führt, die gemäß Fig. 2 mit einer weiteren Kammer 88 verbunden ist. Von der Kammer 88 führt ein Kanal 90 zu einem Ringraum 92, der über einen Durchlaß 94 mit dem Reservoir 62 verbunden ist.

Das die Verbindung zwischen dem Kanal 60 und dem Reservoir 62 öffnende bzw. schließende Ventil 82 ist mittels einer Feder 96 in die Schließstellung vorgespannt.

Gemäß Fig. 1 führt ein Schlitz 100 aus der Unterdruckkammer 28 zu einem Kanal 102, dessen Fortsetzung in Fig. 2 gezeigt ist. Der Kanal 102 mündet in eine Kammer 102', die über eine Membran M von der Kammer 88 getrennt ist.

Schließlich zeigt Fig. 2 noch einen Kanal 104, der vom Strömungsweg zwischen dem Kanal 60 und dem Ventil 76 in die äußere Atmosphäre oder auch wahlweise zum Reservoir 62 abzweigt (siehe auch Fig. 3). Der Kanal 104 wird, wie weiter unten beschrieben ist, normalerweise von einer Dichtlippe 70 des Ventils 69 verschlossen. Ein Stützring 106 hält die Dichtlippe des Ventils 69 zunächst in der Schließstellung.

Fig. 3 zeigt für die Funktion der Bremsanlage wesentliche Bauteile in schematischer Blockdarstellung.

Die Funktion der Bremsanlage ist wie folgt. Bei Betätigung des Bremspedals wird über den Pedalstößel 14' die vom Fahrer aufgebrachte Kraft auf die Primär- und Sekundärkolben 20 bzw. 24 übertragen. Bei funktionierendem Bremskraftverstärker 12 wird in der Unterdruckkammer 28 ein Unterdruck erzeugt, so daß der Membranteller 32 den Ringkolben 36 in Fig. 1 nach links bewegt. Aus der Füllkammer 38 strömt Hydraulikflüssigkeit über den Kanal 60 in den Raum 68 und über das geöffnete Ventil 76 vorbei an dessen Dichtkappe 76', welche durch das Druckgefälle in die Offenstellung bewegt wird, über den Kanal 78 in die Primärkammer 22.

Bei funktionierendem Bremskraftverstärker 12 ist der vom Kanal 60 zum Reservoir 62 führende Strömungsweg bei einer Bremsung zunächst geschlossen, da das Ventil 82 durch die Feder 96 in die Schließstellung gedrückt ist.

Bei funktionierendem Bremskraftverstärker herrscht in der Unterdruckkammer 28 Unterdruck, welcher über den Schlitz 100 und den Kanal 102 zur Kammer 102' übertragen wird. Aufgrund der bei funktionierendem Bremskraftverstärker herrschenden Druckverhältnisse bleibt deshalb das Ventil 82 geschlossen.

Erreicht der Druck in der Hydraulikflüssigkeit einen vorgegebenen Abschaltdruck von z.B. 22 bar, so schließt das Ventil 76 den Weg zwischen der Füllkammer 38 und der Primärkammer 22, so daß in letzterer der Hydraulikdruck nur noch durch weitere Bewegung des Pedalstößels 14' weiter erhöht wird. Beim Schließen des Ventils 76 preßt der in der Primärkammer 22 herrschende Hydraulikdruck die elastische Ventilkappe 76' gegen den Körper 79, der mittels der Dichtung 77 gleitend in der Bohrung 81 geführt ist.

Bei weiter wachsendem Hydraulikdruck in der Primärkammer 22 wird der von der Ventilkappe 76' umfaßte Stößel 76" gegen die Kraft der Feder Fe in Fig. 2 nach oben gedrückt. Dabei öffnet das Ventil 82, so daß der am Kanal 60 anstehende Druck der Füllkammer 38 über den Kanal 90 in das Reservoir 62 abgebaut wird. Der vorstehende Ablauf setzt einen funktionierenden Bremskraftverstärker 12 voraus.

Bei nichtfunktionierendem Bremskraftverstärker 12, bedingt durch Vakuumausfalls baut sich in der Kammer 102' kein Unterdruck auf, so daß über die Membran M das Ventil 82 in die Offenstellung gedrückt wird. Der Strömungswiderstand des Weges an der Dichtkappe 76' des Ventils 76 vorbei in den Kanal 78 ist größer als der Strömungswiderstand am Ventil 82 vorbei in das Reservoir 62, so daß bei nichtfunktionierendem Bremskraftverstärker die Füllstufe unwirksam ist.

Durch die wirksame Druckfläche der Membran M kann der Druck exakt festgelegt werden, bei dem das Ventil 82 öffnet und somit die Füllstufe unwirksam wird.

Fällt während einer Bremsung der Bremskraftverstärker 12 aus, so öffnet die Feder Fe' gegen den Hydraulikdruck das Ventil 82 (dessen Ventilfläche relativ klein ist), so daß die Füllstufe ebenfalls unwirksam wird.

Es ist denkbar, daß ein sehr vorsichtiger Fahrer die Bremse über lange Zeiträume nie so stark betätigt, daß der Abschaltdruck von z.B. 22 bar erreicht wird. Die erfindungsgemäße Anordnung ermöglicht, daß auch in diesem Fall ein möglicher Defekt der Dichtungen 77 und 76' vom Fahrer festgestellt werden kann. Dies geschieht wie folgt. Wie oben beschrieben, wird beim Druckaufbau (Vorwärtshub des Pedalstößels 14') die Dichtlippe 71 des Ventils 69 frei überströmt. Bei einem Rückhub, also einer Rückwärtsbewegung des Pedalstößels 14' in Fig. 1 nach rechts, baut sich der Druck in der Primärkammer 22 allmählich ab. Der Ringkolben 36 wird von der Feder 42 in Fig. 1 nach rechts gedrückt. Die Feder 42 ist so bemessen, daß sich der Druck in

4

der Füllkammer 38 wesentlich schneller reduziert als in der Primärkammer 22. Es entsteht deshalb sofort in der Füllkammer 38 und im Raum 68 ein Unterdruck. Falls die Dichtungen 77 und 76' defekt sind, bewirkt das Druckgefälle, daß sich die Dichtlippe 70 des Ventils 69 vom Kanal 104 abhebt und damit eine leitende Verbindung zur äußeren Atomsphäre herstellt. Bei dieser Bewegung wird die Dichtlippe hinter dem Stützring 106 arretiert, so daß hernach der Kanal 104 offen bleibt. Bei der nächsten Bremsbetätigung kann deshalb kein Druck mehr in der Füllkammer aufgebaut werden, was der Fahrer deutlich merkt, da der Pedalweg beim Bremsen wesentlich verlängert ist.

Auch die Funktion der beim Druckaufbau überströmten inneren Dichtlippe 71 des Ventils 69 wird automatisch überwacht. Falls nämlich die Dichtlippe 71 nicht mehr richtig schließt, entsteht innenseitig der anderen Dichtlippe 70 des Ventils 69 ein Unterdruck, so daß der Zugang zum Kanal 104 geöffnet wird. Somit strömt Luft in die Füllkammer 38 und nach wenigen Bremsbetätigungen wird die Füllstufe versagen, was der Fahrer wegen des wesentlich verlängerten Pedalweges merken wird, so daß er mit ansonsten noch funktionierender Bremse eine Werkstatt aufsuchen kann.

Die vorstehend erläuterten Funktionen der Ventile lassen sich mit Blick auf Fig. 3 wie folgt zusammenfassen, wenn der Abschaltdruck der Füllstufe auf 22 bar eingestellt ist :

1)    Bei funktionierendem Bremskraftverstärker:

Ventil 82 bis 22 bar geschlossen.
Ventil 76 bis 22 bar offen.

---

Ventil 82 über 22 bar offen.
Ventil 76 über 22 bar geschlossen.

---

Ventil 69 immer geschlossen.

2) Bremskraftverstärker nicht funktionstüchtig :

Ventil 82 offen.
Ventil 76 geschlossen.
Ventil 69 geschlossen.

3) Ventil 76 oder Dichtung 77 defekt :

Ventil 69 offen.

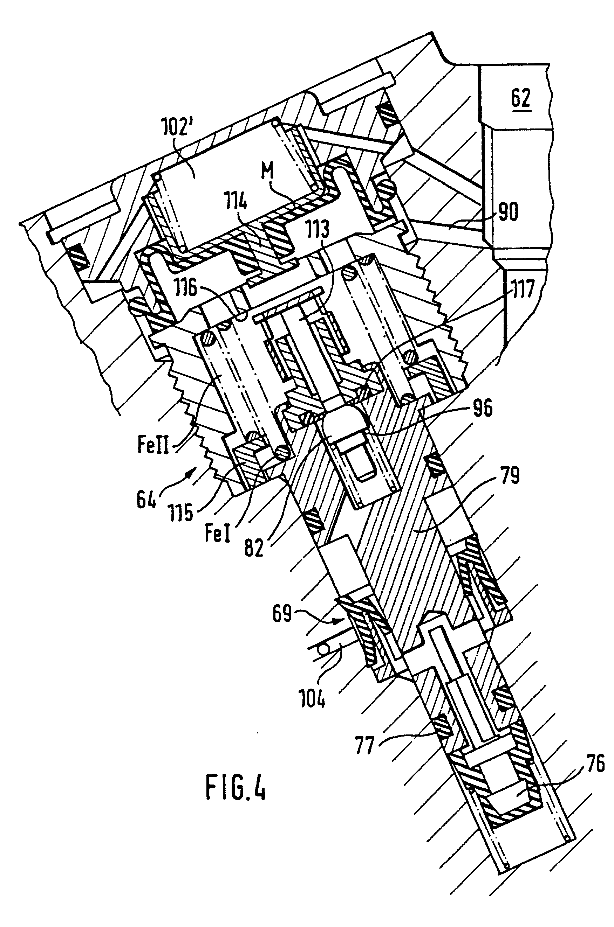

Fig. 4 zeigt eine Abwandlung der Ventilanordnung 64 gemäß Fig. 2 in vergrößertem Maßstab. Die Konstruktion gemäß Fig. 4 unterscheidet sich von derjenigen gemäß Fig. 2 wesentlich dadurch, daß die Feder Fe nunmehr durch zwei unterschiedliche Federn Fel und Fell ersetzt ist.

Die Feder Fel hält den Körper 79 des Ventils 76 in der unteren Stellung. Der Ventilstößel 113 ist für den Vakuumkolben 114 auch dann nicht erreichbar, wenn in der Kammer 102' kein hinreichendes Vakuum herrscht. Deshalb bleibt das Ventil 82 auch dann geschlossen, wenn kein hinreichendes Vakuum herrscht.

Erreicht der Druck in der Füllkammer und der Primärkammer einen Wert von etwa 6 bis 8 bar, so bewegt sich der Körper 79 in der Fig. 4 nach oben in Richtung auf einen Ring 115. Dabei wird die Feder Fel zusammengedrückt. Nunmehr ist der Ventilstößel 113 im Hubbereich des Vakuumkolbens 114 und bei Vakuumausfall in der Kammer 102' kann der Vakuumkolben 114 das Ventil 82 mittels des Ventilstößels 113 öffnen. Sodann baut sich der Druck in der Füllkammer ab. Liegt in der Kammer 102' hinreichendes Vakuum an, so ist der Vakuumkolben 114 mittels der Membrane M in seine obere Lage gedrückt (Fig. 4). Erreicht bei weiterem Durchdrükken der Bremse der Druck in der Hydraulikflüssigkeit einen Wert von ca. 22 bar, so bewegt sich der Körper 79 gegen die Kraft der beiden Federn Fel und Fell in Fig. 4 nach oben, wobei der Ventilstößel 113 gegen den Anschlag 116 anschlägt und somit das Ventil 82 öffnet, so daß sich der Druck in der Füllkammer abbaut.

Die vorstehend anhand der Fig. 4 beschriebene Anordnung hat den Vorteil, daß der Fahrer nicht fälschlicherweise auf einen Defekt der Bremsanlage schließt, wenn das Vakuum im Bremskraftverstärker ohne Defekt desselben aufgrund z.B. eines langen Rangierens unter einen bestimmten Wert abgefallen ist. Mit der Anordnung gemäß Fig. 4 wird der Abschaltdruck der Füllstufe in zwei Stufen gesteuert. Es wird ein relativ geringer Druck von ca. 6 bis 8 bar in der Füllkammer und im Primärkreis aufgebaut. Dies gilt auch dann, wenn der Bremskraftverstärker defekt ist. Erst nach Erreichen dieses Druckes ist überhaupt ein Abschalten der Füllstufe möglich. Bis zu diesem Druck sind aber die sogenannten Leerwege der Bremsen überwunden und die Bremsbeläge an der Bremsscheibe oder dergleichen angelegt. Bis zu diesem Druck wurde sowohl mit der Füllstufe als auch dem Primärkolben der Druck erhöht, d.h. es wurde mit einer relativ großen hydraulisch wirksamen Fläche gearbeitet. Der zugehörige Pedalweg ist deshalb relativ gering.

## Ansprüche

1. Hydraulische Bremsanlage mit einem Hauptbremszylinder (10), einem Bremskraftverstärker (12) und einer Füllkammer (38), mittels der in der Anfangsphase einer Bremsbetätigung die Bremsanlage bei relativ kurzem Pedalweg schnell mit Hydraulikflüssigkeit bis auf einen vorgegebenen Abschaltdruck gefüllt wird, wobei die Füllkammer (38) in leitender Verbindung mit einer Primärkammer (22) des Hauptbremszylinders (10) steht und mit einem Hydraulikflüssigkeitsreservoir (62) über ein erstes Ventil (82) verbindbar ist, welches bei funktionierendem Bremskraftverstärker (12) und einem Druck in der Hydraulikflüssigkeit unterhalb des Abschaltdruckes schließt und bei nichtfunktionierendem Bremskraftverstärker öffnet,
dadurch **gekennzeichnet,** daß in der Verbindungsleitung (60, 72, 74, 78) zwischen der Füllkammer (38) und der Primärkammer (22) ein zweites Ventil (76) angeordnet ist, das bei einem Druck in der Hydraulikflüssigkeit oberhalb des Abschaltdruckes schließt.

2. Bremsanlage nach Anspruch 1,
dadurch **gekennzeichnet,** daß das erste und zweite Ventil (82, 76) miteinander gekoppelt sind.

3. Bremsanlage nach einem der Ansprüche 1 oder 2,
dadurch **gekennzeichnet,** daß das zweite Ventil (76) einen Körper (79) aufweist, der in einer Bohrung (81) geführt und mittels einer Gleitdichtung (77) gegen diese abgedichtet ist.

4. Bremsanlage nach Anspruch 3,
dadurch **gekennzeichnet,** daß von der Verbindungsleitung (60, 72, 74, 78) zwischen der Füllkammer (38) und der Primärkammer (22) ein Abzweigkanal (104) in die äußere Atmosphäre oder das Reservoir (62) führt, welcher durch ein drittes Ventil (69) verschließbar ist, welches bei defekter Gleitdichtung (77) eine leitende Verbindung zwischen der äußeren Atmosphäre bzw. dem Reservoir und der Primärkammer (22) ermöglicht.

5. Bremsanlage nach einem der Ansprüche 1 bis 4,
dadurch **gekennzeichnet,** daß der Abschaltdruck der Füllstufe in zwei Stufen gesteuert wird, wobei zunächst ein relativ geringer Druck von 6-8 bar in der Füllkammer und im Primärkreis aufgebaut wird.

## Claims

1. Hydraulic brake system comprising a master brake cylinder (10), a brake force booster (12) and a filling chamber (38) by means of which in the initial phase of a brake actuation the brake system on relatively short pedal travel is rapidly filled with hydraulic fluid up to a predetermined switch-off pressure, the filling chamber (38) being in conductive communication with a primary chamber (22) of the master brake cylinder (10) and connectable to a hydraulic fluid reservoir (62) via a first valve (82) which closes when the brake force booster (12) is functioning and a pressure obtains in the hydraulic fluid below the switch-off pressure and opens when the brake force booster is not functioning,
characterized in that in the connecting conduit (60, 72, 74, 78) between the filling chamber (38) and the primary chamber (22) a second valve (76) is arranged which closes at a pressure in the hydraulic fluid above the switch-off pressure.

2. Brake system according to claim 1,
characterized in that the first and second valves (82, 76) are coupled to each other.

3. Brake system according to any one of claims 1 or 2,
characterized in that the second valve (76) comprises a body (79) which is guided in a bore (81) and sealed with respect to the latter by means of a sliding seal (77).

4. Brake system according to claim 3,
characterized in that from the connecting conduit (60, 72, 74, 78) between the filling chamber (38) and the primary chamber (22) a branch passage (104) leads into the outer atmosphere or the reservoir (62) and is closable by a third valve (69) which when the sliding seal (77) is defective permits a conducting communication between the outer atmosphere or the reservoir respectively and the primary chamber (22).

5. Brake system according to any one of claims 1 to 4, characterized in that the switch-off pressure of the filling stage is controlled in two ranges, a relatively low pressure of between 6 and 8 bars being first built up in the filling chamber and in the primary circuit.

## Revendications

1. Système de freinage hydraulique, comprenant un maître-cylindre (10), un servofrein (12) et une chambre de charge (38) au moyen de laquelle, dans la phase initiale d'un actionnement du frein, le système de freinage est rapidement rempli de fluide hydraulique, après une course relativement petite de la pédale, jusqu'à obtenir une pression d'arrêt prédéterminée, la chambre de charge (38) communiquant avec une chambre primaire (22) du maître-cylindre (10) et pouvant être reliée à un réservoir de fluide hydraulique (62) par l'intermédiaire d'une première soupape (82) qui se ferme quand le servofrein (12) est en fonction et que la pression existant dans le fluide hydraulique est inférieure à la pression d'arrêt, et qui s'ouvre quand le servofrein ne fonctionne pas, caractérisé en ce qu'une deuxième soupape (76) est disposée dans le conduit de liaison (60, 72, 74, 78) à un point situé entre la chambre de charge (38) et la chambre primaire (22), soupape qui se ferme quand le fluide hydraulique est sous une pression supérieure à la pression d'arrêt.

2. Système de freinage selon la revendication 1, caractérisé en ce que la première soupape (82) et la deuxième soupape (76) sont couplées l'une à l'autre.

3. Système de freinage selon l'une quelconque des revendications 1 ou 2, caractérisé en ce que la deuxième soupape (76) comprend un corps (79) qui est guidé dans un alésage (81) et est rendu étanche contre ce dernier au moyen d'un joint glissant (77).

4. Système de freinage selon la revendication 3, caractérisé en ce qu'un passage d'embranchement (104) part du conduit de liaison (60, 72, 74, 78) à un point situé entre la chambre de charge (38) et la chambre primaire (22) pour déboucher dans l'atmosphère extérieure ou dans le réservoir (62), ledit passage pouvant être fermé par une troisième soupape (69) qui, lorsque le joint glissant (77) est défectueux, permet l'établissement d'une communication, respectivement, entre l'atmosphère extérieure ou le réservoir et la chambre primaire (22).

5. Système de freinage selon l'une quelconque des revendications 1 à 4, caractérisé en ce que le réglage de la pression d'arrêt du stage de chargement se fait dans deux plages, une pression relativement faible, comprise entre 6 et 8 bars, étant d'abord générée dans la chambre de charge et dans le circuit primaire.

FIG.1

EP 0 337 473 B1

FIG.2

FIG.3

FIG.4